# EUROPEAN PATENT APPLICATION

(11) **EP 2 191 985 A1**
(43) Date of publication of application: **02.06.2010**
(21) Application number: 06811730.8
(22) Date of filing: 13.10.2006
(51) Int. Cl.: B60C 13/00, B29D 30/60, B29D 30/72, B60C 13/04

(54) **PNEUMATIC TIRE, TIRE MOLDING APPARATUS AND METHOD OF MOLDING**

(30) Priority: 17.10.2005 JP 2005301730
(71) Applicant: Bridgestone Corporation, Tokyo 104-8340 (JP)
(72) Inventor: OGAWA, Yuichiro, Kodaira-shi, Tokyo 187-8531 (JP)
(74) Representative: Whalley, Kevin
(86) International application number: PCT/JP2006/320442
(87) International publication number: WO 2007/046295

(57) **Abstract**

A pneumatic tire having a portion formed by laminating a rubber ribbon exhibits improved durability due to reduced propagation of cracks from the surface of the laminated portion of the rubber ribbon at a sidewall, for example.
A pneumatic tire includes a laminated portion (40) formed by winding and laminating a rubber ribbon (50), and a surface layer (41) formed by bonding a rubber sheet on the outer surface of the laminated portion (40) at, for example, a sidewall (31). The surface layer (41) covers projections, recessions, and portions of adhesion failure on the laminated portion (40), and smoothes the surface of the tire, thus preventing cracking from propagating from the surface of the tire by tensile forces (P) and compressive forces (Q) during flexure.

## Description

### Technical Field

The present invention relates to pneumatic tires and apparatuses and methods for building tires. In particular, the present invention relates to pneumatic tires formed by laminating rubber ribbons and exhibiting suppressed cracking and improved durability, and relates to apparatuses and methods for building the tires.

### Background Art

A typical pneumatic tire includes a plurality of rubber components such as a tread and sidewalls. Unvulcanized tires (green tires) are built by combining these components, and tire products having predetermined shapes are produced by vulcanizing the green tires. To date, in well-known methods for building green tires, these components are formed so as to have predetermined finished shapes in advance, and are bonded in sequence on building drums.

In this method, each component is shaped with, for example, an extruder by being continuously extruded from a nozzle cap attached to an rubber outlet of the extruder so as to have a predetermined finished cross-sectional shape, and by cutting the extruded rubber. Since the cross sectional size of the component is large, the nozzle and the extruder required for shaping the component are increased in size in this method. In addition, various types of nozzles depending on the cross-sectional shapes of different components must be prepared in advance. Moreover, the nozzle of the extruder must be changed and adjusted each time different components are extruded. This causes a considerable reduction in production efficiency during, in particular, small batch production of many different parts.

To cope with these problems, a tire building apparatus is well known for building a green tire by helically winding and laminating an unvulcanized rubber ribbon on the outer surface of a cylindrical or toroidal building drum (see Patent Document 1).

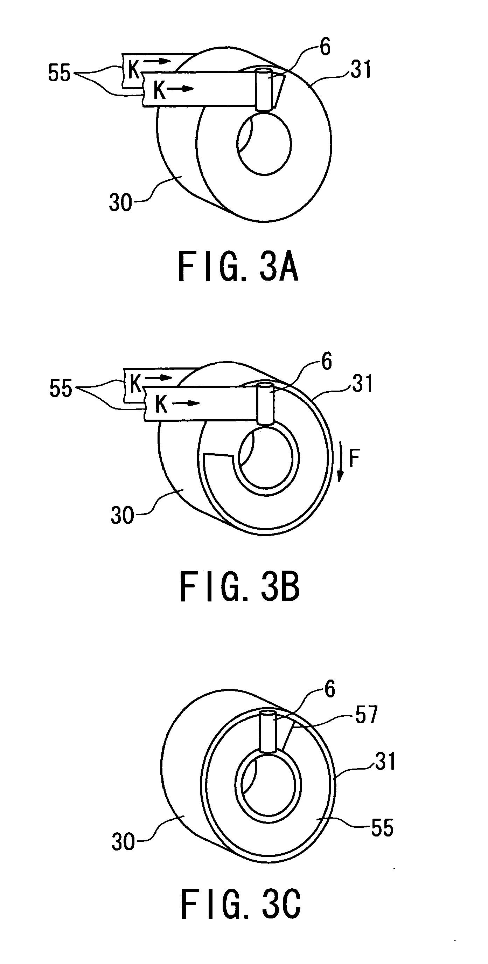

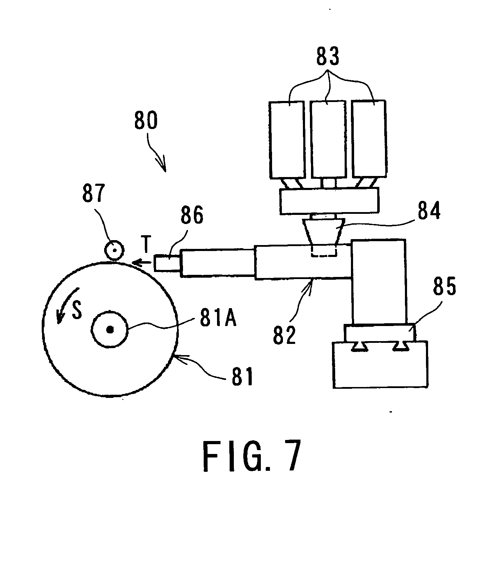

Fig. 7 is a side view schematically illustrating a known tire building apparatus 80.
As shown in Fig. 7, the tire building apparatus 80 includes a cylindrical building drum 81 and an extruder 82 that extrudes a rubber ribbon. The building drum 81 is rotated by driving means (not shown) about a rotating shaft 81A in the direction of an arrow S. The extruder 82 includes a plurality of (three in Fig. 3) rubber supplying units 83, a hopper 84 for charging rubber into the extruder 82, a moving mechanism 85 that moves the extruder 82 in directions parallel to the shaft of the building drum 81, and a nozzle 86 for extruding a rubber ribbon having a predetermined cross-sectional shape.

The tire building apparatus 80 continuously extrudes the rubber ribbon having a predetermined cross-sectional shape from the nozzle 86 (in the direction of an arrow T), and bonds the rubber ribbon at a predetermined position on the outer periphery of the rotating building drum 81 while guiding the rubber ribbon using a guide roller 87. The extruder 82 is moved parallel to the shaft of the building drum 81 by the moving mechanism 85 during bonding of the rubber ribbon such that the rubber ribbon is helically wound and laminated on the outer periphery of the building drum 81 such that a component having a predetermined cross-sectional shape is formed. In this manner, a green tire is formed.

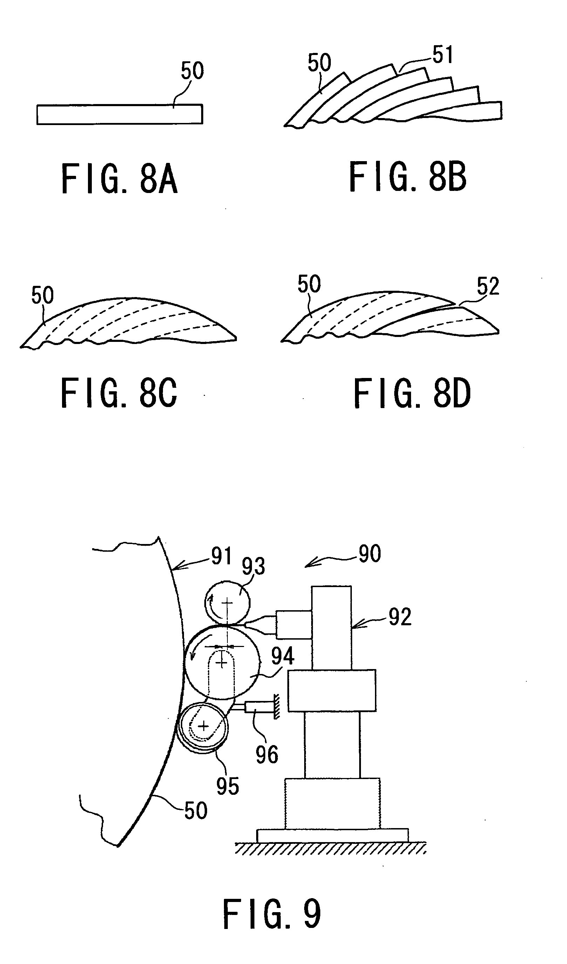

Figs. 8A to 8D are cross-sectional views of a rubber ribbon used for such building and laminated states of the rubber ribbon viewed in a direction orthogonal to the longitudinal direction of the rubber ribbon.
The tire building apparatus 80 forms each component of a green tire having a predetermined cross-sectional shape by laminating a rubber ribbon 50 having a rectangular cross section as shown in Fig. 8A such that one or more layers are formed while partly overlapping the rubber ribbon, as shown in Fig. 8B. Therefore, only several types of nozzles 86 for shaping rubber ribbons having such shapes need to be prepared for this tire building apparatus 80, and the number of nozzles 86 can be considerably reduced compared with the case where components of a tire are integrally bonded. Moreover, the extruder 82 does not need to have a large size, and the time required for preparation such as adjustment of the nozzle 86 can be considerably reduced, facilitating small-batch production of many different parts.

However, when a green tire is built by laminating a rubber ribbon 50 in this manner, the bonding between the layers of the rubber ribbon 50 and the like may be insufficient, and defects such as cracking may occur in the produced tire. Moreover, steps 51 are formed at the edge of the overlapped rubber ribbon 50 as shown in Fig. 8B, and can cause lightness and cracks in the produced tire due to insufficient shaping at the steps 51 during vulcanization. This can lead to, for example, a reduction in the durability of the tire product and poor outward appearance of the tire.

Moreover, when the rubber ribbon 50 is laminated so as to form a plurality of layers, air can be trapped in the steps 51 adjacent to inner layers, and can remain in the tire product. In addition, air trapped between the steps 51 on the outer surface of the tire and the inner periphery of a vulcanizing mold may also be taken in the tire due to flows of rubber during vulcanization. Air trapped in the tire product in this manner leads to ready cracking at the trapped portions due to stress concentration while a vehicle is driven compared with other portions, and the durability of the pneumatic tire can be disadvantageously decreased. Furthermore, extraneous substances such as mold release agent tend to remain at the steps 51 on sidewalls at the sides of the tire. When the green tire is expanded by pressure during vulcanization, the rubber at the steps 51 is deformed and the extraneous substances may be trapped in the rubber. With this, portions into which the extraneous substances bite (adhesion failure) may appear on the surface of the tire product, resulting in cracking.

To cope with these problems, a known tire building apparatus squashes projections at such steps 51 formed by laminating a rubber ribbon 50 using a roller (see Patent Document 2).

Fig. 9 is a side view schematically illustrating this known tire building apparatus 90.
As does the tire building apparatus 80 shown in Fig. 7, the tire building apparatus 90 includes a cylindrical building drum 91, a supplying device 92 such as an extruder for supplying a rubber ribbon 50, and two guide rollers 93 and 94 that guide the rubber ribbon 50. The rubber ribbon 50 supplied from the supplying device 92 is guided by the guide rollers 93 and 94, and helically wound around the outer periphery of the rotating building drum 91 while being partly overlapped. The tire building apparatus 90 further includes a disc-shaped rotatable roller 95 and a driving mechanism 96 that presses the roller 95 toward the outer periphery of the building drum 91. The surface of the rubber ribbon 50 is pressed by the outer periphery of the roller 95 while the rubber ribbon 50 is wound around the outer periphery of the building drum 91.

After the rubber ribbon 50 is pressed by such a roller 95, a brush, or the like, strong adhesion is achieved by pressure between the layers of the rubber ribbon 50 and between the rubber ribbon 50 and other components wound below the rubber ribbon 50, and protrusions at the steps 51 on the surface of the rubber ribbon 50 are squashed into a smooth surface of the rubber ribbon 50 as shown in Fig. 8C. The tire building apparatus 90 can therefore control the above-described lightness during vulcanization caused by the adhesion failure between the layers of the rubber ribbon 50 and the steps 51, or can reduce the cracks on the tire product caused by remaining air or inclusions of extraneous substances. With this, the bonding force between rubber components such as the rubber ribbon 50 can be enhanced, and the durability of the tire product can be improved.

However, even when these components are bonded to each other by pressure while the surface of the tire is smoothed, minute adhesion failure or minute projections and recessions may remain on the surface of the tire product, and can cause a crack 52 to occur thereat and to propagate from the surface of the tire product as shown in Fig. 8D due to repeated loads, deformations, or the like applied during driving. In particular, the sidewalls that protect the side surfaces of the tire are constantly flexed during driving, and repeatedly undergo deformations such as expansion and contraction. Furthermore, the flexure is the most significant thereat compared with those at other portions. The deformation, the tensile force, and the compressive force during flexure also become the largest accordingly, resulting in the highest possibility that cracks propagate from the surface of the tire.

Patent Document 1: Japanese Unexamined Patent Application Publication No. 2000-79643
Patent Document 2: Japanese Unexamined Patent Application Publication No. 2004-216603

### Disclosure of Invention

### Problems to be Solved by the Invention

The present invention is accomplished to solve the above-described problems. It is an object of the present invention to provide a pneumatic tire having a portion formed by laminating a rubber ribbon, and exhibiting improved durability due to reduced propagation of cracks from the surface of the laminated portion of the rubber ribbon at a sidewall, for example.

### Means for Solving the Problems

According to the invention as claimed in Claim 1, a pneumatic tire including a laminated portion formed by laminating a rubber ribbon, wherein a rubber sheet for smoothing the outer surface of the tire is disposed on at least a part of the outer surface of the laminated portion.
According to the invention as claimed in Claim 2, the pneumatic tire according to Claim 1 is **characterized in that** the laminated portion is a sidewall.
According to the invention as claimed in Claim 3, the pneumatic tire according to Claim 1 or 2 is **characterized in that** the thickness of the rubber sheet is from 0.05 to 2 mm.
According to the invention as claimed in Claim 4, in a tire building apparatus for building a green tire including a rotatable building drum having a toroidal or cylindrical outer surface; a supplying means for supplying an unvulcanized rubber ribbon to the building drum; and laminating means for winding and laminating the rubber ribbon on the outer surface of the building drum, the laminating means forming a laminated portion having a predetermined cross-sectional shape by laminating the rubber ribbon; the apparatus further includes a supplying means for supplying an unvulcanized rubber sheet to the laminated portion of the rubber ribbon; and bonding means for bonding the rubber sheet on at least a part of the outer surface of the laminated portion of the rubber ribbon, whereby the rubber sheet smoothes the outer surface of the laminated portion.
According to the invention as claimed in Claim 5, the tire building apparatus according to Claim 4 is **characterized in that** the rubber sheet supplied by the supplying means for supplying an unvulcanized rubber sheet is at room temperature or heated.
According to the invention as claimed in Claim 6, the tire building apparatus according to Claim 4 or 5 is **characterized in that** the supplying means for supplying an unvulcanized rubber sheet includes an extruder that extrudes the rubber sheet, the bonding means bonding the rubber sheet extruded from the extruder on the outer surface of the laminated portion of the rubber ribbon.
According to the invention as claimed in Claim 7, the tire building apparatus according to any one of Claims 4 to 6 is **characterized in that** the laminated portion of the rubber ribbon is a sidewall.
According to the invention as claimed in Claim 8, a method for building a tire includes forming a laminated portion having a predetermined cross-sectional shape by winding and laminating an unvulcanized rubber ribbon on the outer surface of a building drum having a toroidal or cylindrical outer surface; and bonding an unvulcanized rubber sheet on at least a part of the outer surface of the laminated portion, whereby the rubber sheet smoothes the outer surface of the laminated portion.
According to the invention as claimed in Claim 9, the method for building a tire according to Claim 8 is **characterized in that** the rubber sheet bonded during the bonding step is at room temperature or heated.
According to the invention as claimed in Claim 10, the method for building a tire according to Claim 8 or 9 is **characterized in that** the laminated portion is a sidewall.

### Advantages

According to the present invention, a surface layer is formed by bonding a rubber sheet on the outer surface, for example, a sidewall, of a green tire formed by laminating a rubber ribbon so as to smooth the surface of the tire. Thus, starting points of cracks can be removed, and the durability of the pneumatic tire can be improved due to reduced propagation of cracks from the surface of the tire.

### Brief Description of Drawings

[Fig. 1] Fig. 1 is a side view schematically illustrating a part of a tire building apparatus according to an embodiment.
[Fig. 2] Figs. 2A and 2B are side views schematically illustrating exemplary rubber shaping devices for shaping rubber sheets. Fig. 2A illustrates a calender, and Fig. 2B illustrates an extruder.
[Fig. 3] Figs. 3A to 3C are perspective views schematically illustrating a process of bonding the rubber sheets to both sidewalls of a green tire.
[Fig. 4] Fig. 4 is a side elevation viewed in a radial direction of the tire schematically illustrating a rubber sheet being bonded to a sidewall of a green tire using an extruder in a "hot" method.
[Fig. 5] Figs. 5A to 5C are cross-sectional views enlarged in the width direction of a tire schematically illustrating the structure of a sidewall of a rolling pneumatic tire according to an embodiment.
[Fig. 6] Fig. 6 illustrates the results of driving tests.
[Fig. 7] Fig. 7 is a side view schematically illustrating a known tire building apparatus.
[Fig. 8] Figs. 8A to 8D are cross-sectional views of a rubber ribbon used in a known method for building a tire and laminated states of the rubber ribbon viewed in a direction orthogonal to the longitudinal direction of the rubber ribbon.
[Fig. 9] Fig. 9 is a side view schematically illustrating another known tire building apparatus.

### Reference Numerals

1: tire building apparatus, 2: building drum, 3: extruder, 4: roller, 5: roller, 6: roller, 10: calender, 11: roll, 12: roll, 20: extruder, 21: body of the extruder, 22: rubber outlet, 23: cylinder, 24: hopper, 25: roller head, 26: roller, 27: roller, 30: green tire, 31: sidewalls, 40: laminated portion, 41: surface layers, 50: rubber ribbon, 55: rubber sheets, 56: rubber compound, and 57: connecting portions.

### Best Mode for Carrying Out the Invention

An embodiment of the present invention will now be described with reference to the drawings.

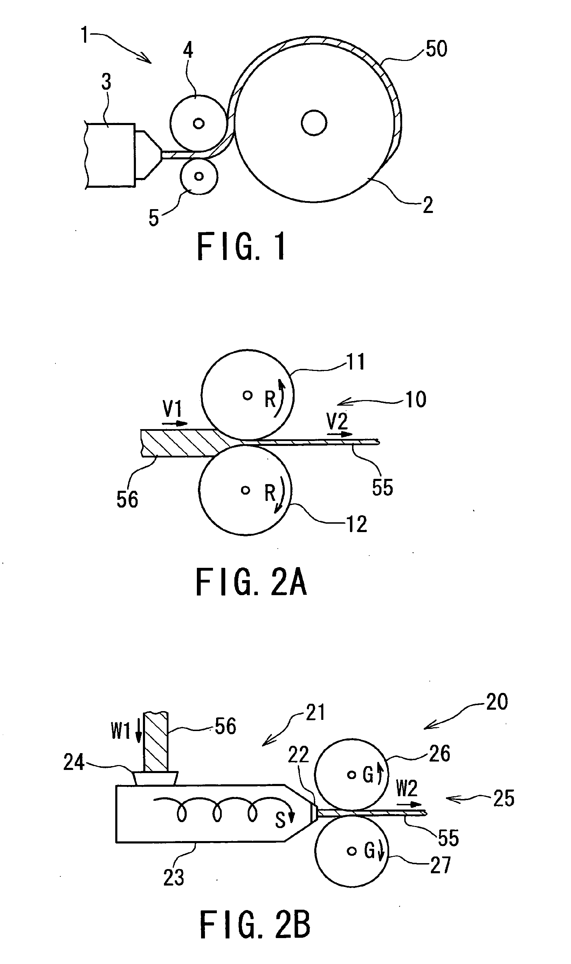

Fig. 1 is an enlarged side view schematically illustrating a part, associated with lamination of a rubber ribbon, of a tire building apparatus 1 according to this embodiment.
This tire building apparatus 1 builds a green tire by laminating an unvulcanized rubber ribbon 50 while partly overlapping the ribbon such that sidewalls and the like having predetermined cross-sectional shapes are formed in a manner similar to that performed in the known tire building apparatuses 80 and 90 shown in Figs. 7 and 9. As shown in Fig. 1, the tire building apparatus 1 includes a building drum 2, an extruder 3, and a set of rollers 4 and 5 disposed between the building drum 2 and the extruder 3.

The building drum 2 has a cylindrical or toroidal shape corresponding to the shape of the green tire to be built, and is rotated about an axis by driving means (not shown). The extruder 3 supplies the unvulcanized rubber ribbon 50, and includes a nozzle having a predetermined cross-sectional shape. Rubber is continuously extruded via the nozzle so as to form the rubber ribbon 50 (see Fig. 8A). The set of rollers 4 and 5 faces the building drum 2, and the roller 4 (upper roller in Fig. 1) has a diameter larger than that of the roller 5 (lower roller in Fig. 1). These rollers 4 and 5 control the position and the angle of the rubber ribbon 50 while conveying the rubber ribbon 50 to the building drum 2, and the roller 4 having a larger diameter bonds the rubber ribbon 50 to the outer surface of the building drum 2.

The tire building apparatus 1 having the above-described structure helically winds and laminates the rubber ribbon 50 supplied from the extruder 3 on the outer surface of the rotating building drum 2 while controlling the position and the angle of the rubber ribbon 50 using the rollers 4 and 5 such that the rubber ribbon 50 forms a predetermined cross-sectional shape. In the case of a toroidal building drum 2, a green tire having a predetermined shape is built by forming, for example, sidewalls and a tread as described above. In the case of a cylindrical building drum 2, a green tire having a predetermined shape is built by forming, for example, sidewalls and a tread as described above while the central part of a cylindrical rubber member is expanded such that the rubber member forms a toroidal shape.

As described above, steps (see Fig. 8B) are formed on the surface of the green tire at the edge of the overlapping rubber ribbon 50. Therefore, when the green tire is vulcanized without any processing or after the steps on the surface are squashed for smoothing, cracking may occur on the surface of the tire product, in particular, on the surfaces of the sidewalls at which flexure during rolling is the most significant as described above. Accordingly, the tire building apparatus 1 according to this embodiment forms surface layers on the outer surface of the green tire at the laminated portion of the rubber ribbon 50 (herein at the sidewalls) after the building by bonding relatively thin and wide rubber sheets so that the steps, projections, and depressions, which can be starting points of cracks, are covered and cracking is prevented from propagating from the surface of the tire. Therefore, the tire building apparatus 1 further includes supplying means that supplies unvulcanized rubber sheets to the green tire and bonding means that bonds the supplied rubber sheets at predetermined positions.

Herein, two methods, i.e., a "cold" method and a "hot" method, can be used for boding the rubber sheets. In the "cold" method, rubber sheets formed by a rubber shaping device are cooled and temporarily wound around rolls such as reels. Subsequently, the rubber sheets are bonded at room temperature while being unwound from the rolls. Therefore, in this method, the tire building apparatus 1 is provided with a device that holds the rolls of the rubber sheets and supplies the rubber sheets to the green tire. This device and the rolls of the rubber sheets constitute supplying means for supplying the rubber sheets. On the other hand, in the "hot" method, rubber sheets formed in a rubber shaping device is directly bonded to the surface of the green tire without being cooled. Therefore, in this method, the tire building apparatus 1 is provided with a shaping device for shaping the rubber sheets, for example, serving as supplying means for supplying the rubber sheets.

Although these methods different from each other in the structure of the device and the temperature, for example, during bonding, as described above, each rubber sheet is shaped so as to have a width corresponding to the portion to which the rubber sheet is to be bonded and a predetermined thickness by any rubber shaping device, for example, a calender or an extruder in both methods.
Figs. 2A and 2B are side views schematically illustrating exemplary rubber shaping devices. Fig. 2A illustrates a calender, and Fig. 2B illustrates an extruder.

As shown in Fig. 2A, the calender 10 includes a plurality of (two in this embodiment) cylindrical rolls 11 and 12 rotated by driving means (not shown). The rolls 11 and 12 are vertically aligned such that the shafts thereof are parallel to each other and that the outer peripheries of the rolls 11 and 12 have a predetermined spacing corresponding to the thickness of a rubber sheet 55 to be shaped. In this calender 10, a heated rubber compound 56 is fed between the rolls 11 and 12 (in the direction of an arrow V1 in Fig. 2A), rolled between the rolls 11 and 12 that rotate in opposite directions (in the directions of arrows R in Fig. 2A), and continuously shaped into a rubber sheet 55 having a predetermined thickness and width (in the direction of an arrow V2 in Fig. 2A).

On the other hand, as shown in Fig. 2B, the extruder 20 includes a body 21 that heats, kneads, and extrudes a rubber compound 56 and a roller head 25 including a pair of cylindrical rollers 26 and 27 disposed in front of a rubber outlet 22 of the body 21. The body 21 includes a substantially cylindrical cylinder 23, a screw (not shown) having a spiral flight rotating inside the cylinder 23, a hopper 24 disposed at the side surface of the cylinder 23 for charging, for example, the rubber compound 56 into the cylinder 23, the rubber outlet 22 disposed at an end of the cylinder, and heating means (not shown) that heats the cylinder 23 and other parts so as to heat the rubber inside the extruder to a predetermined temperature. The rollers 26 and 27 in the roller head 25 are vertically aligned such that their shafts are parallel to each other and that the outer peripheries of the rolls 26 and 27 have a predetermined spacing corresponding to the thickness of a rubber sheet 55 to be shaped.

The extruder 20 having the above-described structure heats and kneads the rubber compound 56 charged from the hopper 24 into the cylinder 23 (in the direction of an arrow W1 in Fig. 2B) while spirally conveying the rubber compound 56 toward the rubber outlet 22 using a rotating screw (in the direction of an arrow S in Fig. 2B), and extrudes the rubber compound 56 from the rubber outlet 22. The extruded rubber is rolled between the rollers 26 and 27 in the roller head 25 rotating in opposite directions (in the directions of arrows G in Fig. 2B), and continuously shaped into the rubber sheet 55 having a predetermined thickness and a predetermined width (in the direction of an arrow W2 in Fig. 2B). Instead of the roller head 25, a nozzle may be attached to the end of the rubber outlet 22 so that rubber is continuously extruded from the opening of the nozzle and shaped into the rubber sheet 55 having a predetermined cross-sectional shape.

In the tire building apparatus 1 according to this embodiment, rubber sheets 55 shaped as described above are bonded at predetermined positions of both sidewalls on the sides of a green tire by the bonding means such that surface layers, each composed of one rubber sheet 55, are formed on the outer surface of the laminated portion formed by laminating the rubber ribbon 50. Herein, the rubber sheets 55 can be bonded to the sidewalls by tackiness of the rubber itself by pressing the rubber, or can be bonded to the sidewalls by pressing the rubber toward the sidewalls after an adhesive is applied to the sidewalls or bonding surfaces of the rubber sheets 55. In particular, in the "hot" method where the rubber sheets 55 are bonded while being shaped, the temperature of the rubber is higher than that in the "cold" method, and the tackiness is also higher. Therefore, the rubber sheets 55 can be sufficiently firmly bonded by only the tackiness of the rubber sheets 55.

Figs. 3A to 3C are perspective views schematically illustrating a process of bonding the rubber sheets 55 to both sidewalls 31 of a green tire 30.
In this tire building apparatus 1, the rubber sheets 55 are bonded to both sides of the green tire 30 at the same time. Since the process is the same, a procedure for bonding the rubber to one of the sidewalls 31 at the sides of the green tire 30 will be described.

First, as shown in Fig. 3A, the tire building apparatus 1 supplies a rubber sheets 55 from means (not shown) for supplying the rubber sheets 55 to the sidewall 31 (in the directions of arrows K in Fig. 3) while the green tire 30 is not rotated. Next, when a sensor (not shown), for example, detects the arrival of the leading end of the rubber sheet 55 at a predetermined position on the sidewall 31, the leading end of the rubber sheet 55 is pushed from the outside of the tire in the width direction of the tire by a pusher (not shown) such that the rubber sheet 55 is bonded at the predetermined position of the sidewall 31 by pressure. Subsequently, the pusher is detached from the rubber sheet 55, and a rotatable cylindrical roller 6 is pressed to substantially the same position. At this moment, the shaft of the roller 6 is substantially parallel to the outer surface of the sidewall 31, and is substantially orthogonal to a rotating direction of the green tire 30 (the direction of an arrow F in Fig. 3B).

Next, as shown in Fig. 3B, the rubber sheet 55 is bonded along the sidewall 31 of the green tire 30 rotating in the same direction (the direction of the arrow F in Fig. 3B) in synchronization with the speed of supplying the rubber sheet 55. At this moment, the rubber sheet 55 is pressed by the roller 6 and bonded by pressure while air between the rubber sheet 55 and the lower component is removed and the rubber sheet 55 is deformed so as to fit projections and depressions on the surface of the laminated portion of the rubber ribbon. Moreover, the outer portion of the rubber sheet 55 in radial directions of the tire is expanded and bonded such that the rubber sheet 55 is deformed into a substantially ring shape corresponding to the shape of the sidewall 31.

In this state, the supply of the rubber sheet 55 and the rotation of the green tire 30 are continued. When a sensor (not shown), for example, detects that the leading end of the rubber sheet 55 reaches the bonding start position as shown in Fig. 3C after one rotation of the green tire 30, the rotation of the green tire 30 is stopped and the rubber sheet 55 is cut by cutting means (not shown). Subsequently, the roller 6 is separated from the surface, and the boding operation is completed. At this moment, the trailing end of the cut rubber sheet 55 is bonded to the leading end by the pressure of the roller 6.

Herein, with the rubber sheet 55, a thickness of less than 0.05 mm may lead to tearing of the rubber sheet 55 by deformation during bonding due to insufficient tensile strength, and cracking caused by projections and depressions on the surface of the laminated portion of the rubber ribbon. In contrast, a thickness exceeding 2 mm precludes the bonding operation, for example, due to the high stiffness of the rubber sheet 55, and causes air trapping between the rubber sheet and the lower component due to insufficient deformation of the rubber sheet with reduced flexibility along the projections and the depressions on the surface of the laminated portion. Thus, the thickness of the rubber sheet 55 preferably ranges from 0.05 to 2 mm.

A rotatable cylindrical brush to be pressed toward the surface of the sidewall 31 may be disposed downstream of the roller 6 in the tire-rotating direction so that both ends of the bonded rubber sheet 55 in the width direction are reliably bonded to the sidewall 31 with the brushing. Moreover, the surface of the sidewall 31 may be, for example, pressed by a roller or brushed by a brush in advance for smoothing the surface of the laminated portion of the rubber ribbon before bonding the rubber sheet 55.

Furthermore, the rubber sheet 55 to be supplied may be cut into a predetermined length required for bonding, and may be bonded to one of the sidewalls 31 at a time. That is, after one rubber sheet 55 is bonded to one of the sidewalls, the green tire 30 may be rotated about an axis of a radial direction of the tire by 180°, and another rubber sheet 55 is bonded to the other sidewall. In this single-side bonding case, the tire building apparatus 1 needs an additional rotating device for turning the green tire 30 over after the bonding at one of the sidewalls and for directing the other sidewall toward the bonding means. In this case, the means for supplying and bonding the rubber sheets 55 needs to be disposed only at one side of the green tire 30.

In the bonding by the "hot" method, the rubber sheet 55 can be bonded with the rollers in the devices for shaping the rubber sheets 55 (see Figs. 2A and 2B).

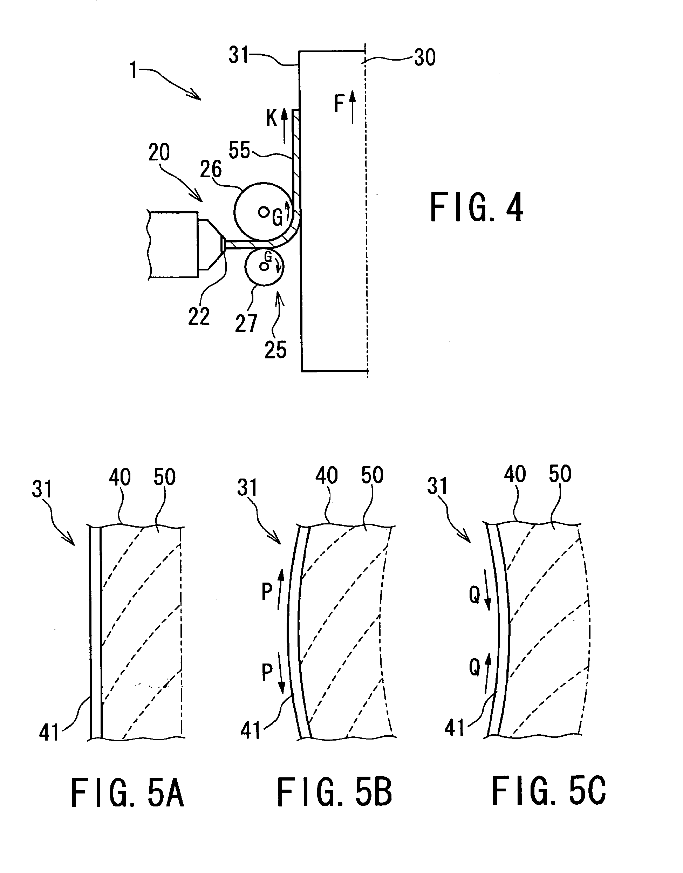

Fig. 4 is a side elevation viewed in a radial direction of the tire schematically illustrating a rubber sheet 55 being bonded to one of the sidewalls 31 using the extruder 20 in the "hot" method.

In this case, as shown in Fig. 4, the diameter of the roller 26 (upper roller in Fig. 4) in the roller head 25 at the tip of the extruder 20 is larger than that of the roller 27 (lower roller in Fig. 4), and the outer periphery of the roller 26 is pressed toward a predetermined position of the sidewall 31 during bonding of the rubber sheet 55. In this state, rubber is extruded from the rubber outlet 22, and rolled between the rollers 26 and 27 in the roller head 25. While the rubber is shaped into a sheet having a predetermined cross section, the rubber sheet 55 is bonded at a predetermined position of the sidewall 31 by the roller 26. That is, the rubber sheet 55 is supplied (in the direction of an arrow K in Fig. 4) by rotating the rollers 26 and 27 in opposite directions (in the directions of arrows G in Fig. 4), and is bonded to the sidewall 31 of the green tire 30 (rotating in the direction of an arrow F in Fig. 4) as in the same manner shown in Figs. 3A to 3C.

After the rubber sheet 55 is bonded as described above, a substantially ring-shaped surface layer connected at a connecting portion 57 is formed on the outer surface of the sidewall 31 at each side of the green tire 30 as shown in Fig. 3C. The green tire 30 is then removed from the tire building apparatus 1, transferred to a vulcanizing apparatus by a conveying apparatus (not shown), and vulcanized in a mold into a pneumatic tire (tire product) having a predetermined shape.

Figs. 5A to 5C are cross-sectional views enlarged in the width direction of the tire schematically illustrating the structure of one sidewall 31 of the rolling pneumatic tire after vulcanization.
As shown in Fig. 5A, this pneumatic tire includes a laminated portion 40 serving as inner layers formed by helically winding and laminating a rubber ribbon 50 and a surface layer 41 outside the laminated portion formed by bonding a rubber sheet 55 at each sidewall 31. That is, the outer surface of the sidewall 31 at each side of the tire is composed of a single rubber layer.

Herein, the flexure of the sidewall 31 is the most significant in the rolling tire, and the sidewall 31 is repeatedly deformed from an unloaded state (Fig. 5A) to an expanded state or a contracted state (Fig. 5B or 5C). That is, during flexure, the sidewall is curved outward in the width direction of the tire as shown in Fig. 5B, and tensile forces (arrows P in Fig. 5B) act so as to expand, for example, the surface layer 41 in the direction of the arrows P. Alternatively, the sidewall is oppositely curved inward in the width direction of the tire as shown in Fig. 5C, and compressive forces (arrows Q in Fig. 5C) act so as to compress, for example, the surface layer 41 in the direction of the arrows Q.

Since the sidewall 31 is repeatedly expanded and contracted by large forces acting during driving in this manner, cracking may occur at minute projections and depressions remaining on the surface and may propagate from the surface of the sidewall 31 formed by laminating only the rubber ribbon 50, as described above. Moreover, when adhesion failure of the rubber ribbon 50 occurs, portions of the adhesion failure may be split by the tensile forces generated during expansion, or portions of the adhesion failure may be shifted in a transverse direction by the compressive forces and cracks can propagate, for example, inward.

Since this pneumatic tire has the surface layer 41 formed by bonding the rubber sheet 55 to the outer surface of the laminated portion 40 of the rubber ribbon 50, projections and depressions serving as starting points of cracks are covered, and the surface is smoothed. Thus, cracking can be prevented from propagating therefrom. At the same time, since the surface layer 41 prevents split and shift of portions of the adhesion failure, cracking can be prevented from propagating from the surface of the sidewall 31, resulting in an improved durability of the pneumatic tire.

In this embodiment, a wide rubber sheet 55 is bonded to the entire surface of the sidewall 31. However, a narrower rubber sheet 55 can be bonded to the sidewall 31 by, for example, shifting the position of the rubber sheet such that the rubber sheet partly overlaps with itself in radial directions of the tire. In addition, the narrow rubber sheet 55 can be bonded to only a portion that significantly flexes in particular for forming a surface layer 41 on only the portion required on the sidewall 31. Moreover, in order to enhance the strength of the surface layer 41, two or more plies of the rubber sheet 55 can be bonded to the same portion for forming the surface layer 41 composed of two or more plies of the rubber sheet 55.

Furthermore, additional surface layers can be formed by bonding rubber sheets 55 to other portions, for example, the tread of the green tire 30 formed by laminating the rubber ribbon 50. Also in this case, cracking can be prevented from propagating from the surface, and the durability of the pneumatic tire can be improved as in the case of the sidewall 31.

### (Driving Test)

In order to confirm the effect of the present invention, tires according to the above-described embodiment (hereinafter referred to as implementation products) formed by bonding rubber sheets 55 to sidewalls 31 as described above, tires according to a comparative example (hereinafter referred to as comparative products 1) formed by laminating a rubber ribbon and by pressing the surface thereof for bonding the components to each other by pressure and for squashing projections, and tires according to another comparative example (hereinafter referred to as comparative products 2) formed by only laminating a rubber ribbon were produced for driving tests. Conditions for production and the shapes of the tires, for example, other than those described above were identical. The number of the tires produced was identical for each example, and the incidence of cracking after driving a predetermined distance was compared.

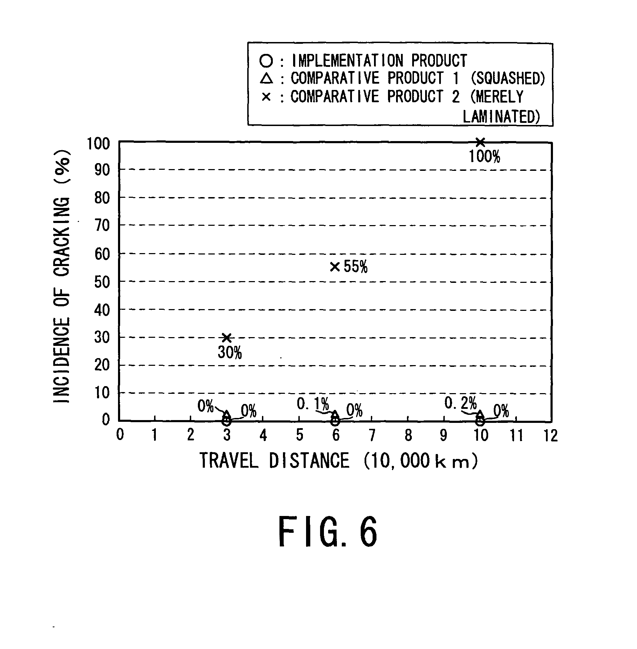

Fig. 6 illustrates the results of the driving tests. The abscissa represents the travel distance (10,000 km) while the ordinate represents the incidence of cracking (%).
The incidence of cracking of each tire, which is expressed in percentage, is determined by dividing the total number of tires cracked before reaching a predetermined travel distance by the total number of tires used for the driving tests. In Fig. 6, circles indicate the incidence of cracking of the implementation products, triangles indicate that of the comparative products 1, and crosses indicate that of the comparative products 2.

As shown in Fig. 6, the incidences of cracking after about thirty-thousand kilometer driving were 0% for the comparative products 1 and the implementation products as against 30% for the comparative products 2, and cracking did not occur in the comparative products 1 and the implementation products. The incidences of cracking after about sixty-thousand kilometer driving were 0.1% for the comparative products 1 and 0% for the implementation products as against 55% for the comparative products 2; and cracking did not occur in the implementation products whereas the comparative products 1 had a few cracks. The incidences of cracking after about one hundred-thousand kilometer driving were 100% for the comparative products 2, 0.2% for the comparative products 1, and 0% for the implementation products; and cracking did not occur in the implementation products whereas all the comparative products 2 had cracks and a larger number of comparative products 1 had cracks. These results proved that the present invention could prevent cracking from propagating from the surface, and could improve the durability of the pneumatic tire.

## Claims

1. A pneumatic tire comprising a laminated portion formed by laminating a rubber ribbon; wherein
a rubber sheet for smoothing the outer surface of the tire is disposed on at least a part of the outer surface of the laminated portion.

2. The pneumatic tire according to Claim 1, wherein the laminated portion is a sidewall.

3. The pneumatic tire according to Claim 1 or 2, wherein the thickness of the rubber sheet is from 0.05 to 2 mm.

4. A tire building apparatus for building a green tire comprising a rotatable building drum having a toroidal or cylindrical outer surface; a supplying means for supplying an unvulcanized rubber ribbon to the building drum; and laminating means for winding and laminating the rubber ribbon on the outer surface of the building drum, the laminating means forming a laminated portion having a predetermined cross-sectional shape by laminating the rubber ribbon; the apparatus further comprising:
a supplying means for supplying an unvulcanized rubber sheet to the laminated portion of the rubber ribbon; and
bonding means for bonding the rubber sheet on at least a part of the outer surface of the laminated portion of the rubber ribbon, wherein
the rubber sheet smoothes the outer surface of the laminated portion.

5. The tire building apparatus according to Claim 4, wherein the rubber sheet supplied by the supplying means for supplying an unvulcanized rubber sheet is at room temperature or heated.

6. The tire building apparatus according to Claim 4 or 5, wherein the supplying means for supplying an unvulcanized rubber sheet includes an extruder that extrudes the rubber sheet, the bonding means bonding the rubber sheet extruded from the extruder on the outer surface of the laminated portion of the rubber ribbon.

7. The tire building apparatus according to any one of Claims 4 to 6, wherein the laminated portion of the rubber ribbon is a sidewall.

8. A method for building a tire comprising:
forming a laminated portion having a predetermined cross-sectional shape by winding and laminating an unvulcanized rubber ribbon on the outer surface of a building drum having a toroidal or cylindrical outer surface; and
bonding an unvulcanized rubber sheet on at least a part of the outer surface of the laminated portion, wherein
the rubber sheet smoothes the outer surface of the laminated portion.

9. The method for building a tire according to Claim 8, wherein the rubber sheet bonded during the bonding is at room temperature or heated.

10. The method for building a tire according to Claim 8 or 9, wherein the laminated portion is a sidewall.
